# EUROPÄISCHE PATENTSCHRIFT

(11) **EP 4 078 737 B1**
(45) Veröffentlichungstag und Bekanntmachung des Hinweises auf die Patenterteilung: **31.01.2024**
(21) Anmeldenummer: 20833789.9
(22) Anmeldetag: 16.12.2020
(51) Int. Cl.: H01R 13/28, H01R 13/703, H01R 13/53, H02H 9/02

(54) **STECKKONTAKTVORRICHTUNG ZUR VERMEIDUNG EINES LICHTBOGENS BEIM TRENNEN EINER GLEICHSTROMVERBINDUNG**
PLUG-IN CONTACT APPARATUS FOR PREVENTING AN ARC WHEN DISCONNECTING A DC CONNECTION
APPAREIL À CONTACT ENFICHABLE DE PRÉVENTION D'UN ARC LORS DE LA DÉCONNEXION D'UNE CONNEXION À CC

(30) Priorität: 19.12.2019 DE 102019135128
(43) Veröffentlichungstag der Anmeldung: 26.10.2022
(73) Patentinhaber: PHOENIX CONTACT GmbH & Co. KG, 32825 Blomberg (DE)
(72) Erfinder: KLIMPEL, Marc, 32791 Lage (DE); BRAND, Fredrik, 32816 Schieder-Schwalenberg (DE); KROME, Karsten, 32756 Detmold (DE); MEYER, Rüdiger, 31812 Bad Pyrmont (DE); DURTH, Rainer, 32805 Horn-Bad Meinberg (DE); HANSES, Markus, 37671 Höxter (DE); SCHÄFERS, Martin, 33014 Paderborn (DE); BECKMANN, Ralf, 32758 Detmold (DE); LOKE, Sebastian, 32676 Lüdge (DE); JÜRGENSMEIER, Philipp, 32683 Barntrup (DE)
(74) Vertreter: LifeTech IP Spies & Behrndt Patentanwälte PartG mbB
(86) Internationale Anmeldenummer: PCT/EP2020/086513
(87) Internationale Veröffentlichungsnummer: WO 2021/122811

(56) Entgegenhaltungen:
- EP-A1- 2 742 565
- EP-B1- 2 742 565
- DE-A1-102012 008 614
- DE-A1-102015 224 268
- US-A1- 2017 288 348
- US-A1- 2017 288 348

## Beschreibung

Die Erfindung betrifft eine Steckkontaktvorrichtung zur Vermeidung oder Löschung eines Lichtbogens beim Trennen oder Schließen einer Gleichstromverbindung. Beim Trennen oder Schließen einer Gleichstrom-Verbindung (DC-Verbindung) muss, anders als bei einer Wechselstrom-Anwendung (AC-Anwendung), vermehrt mit einem Lichtbogen gerechnet werden. Besonders bei Steckverbindern stellt dies eine Herausforderung dar. Zum einen führt der Lichtbogen zu Schäden am Steckverbinder, sowohl an Gehäuseteilen als auch an den Kontakten. Zum anderen birgt der Lichtbogen aber auch eine Gefahr für den Bediener.

Es gibt verschiedene Konzepte, den Lichtbogen mit mechanischen Hilfsmitteln zu löschen, wie beispielsweise Opferzonen, oder mittels eines sogenannten Blasmagneten (aufgrund der auf das Plasma des Lichtbogens wirkenden Lorentz-Kraft) oder aufgrund einer Geschwindigkeit der Kontakttrennung.

Eine weitere Alternative ist die elektronische Funkenlöschung. Dabei wird der Lichtbogen mithilfe elektronischer Komponenten unterdrückt. Das Prinzip lässt sich mit einem elektronischen Schalter vergleichen. Wie bei einem mechanischen Schalter wird der Stromkreis unterbrochen. Da jedoch kein physischer Kontakt geöffnet wird, entsteht dabei auch kein Lichtbogen. Der Stromkreis wird mittels elektronischer Komponenten unterbrochen. Halbleiterbauelemente wie Bipolartransistoren mit isolierter Gate-Elektrode (IGBTs), Metall-Oxid-Halbleiter-Feldeffekttransistoren (MOSFETs) oder auch Varistoren verlagern dabei die Schaltleistung auf die elektronischen Baugruppen und die Kontakte werden somit geschützt. Solche Technologien sind beispielsweise in den Druckschriften EP 2 742 565 B1, US 2018/0006 447 A1, DE 102 537 49 A1 und DE10 2007 043 512 A1 beschrieben. In einigen Dokumenten, wie z. B. US 2017/288348 A1, das den Oberbegriff des Anspruchs 1 offenbart, ist die Erkennung des Öffnens eines Steckverbinders beschrieben, so dass eine an den Steckverbinder angelegte Gleichspannung abgeschaltet werden kann, um die Entstehung eines Lichtbogens zu vermeiden oder mindestens zu reduzieren.

Dabei fließt der Strom im Normalbetrieb entweder permanent über die Elektronik, was kontinuierlich Verlustleistung erzeugt, oder während des Schaltvorganges wird der Stromfluss kurzzeitig über die Elektronik geführt und abgeschaltet, was energietechnisch deutlich besser ist. In diesem Fall ist ein zusätzlicher Hilfskontakt erforderlich, der parallel zu einem der Lastkontakte liegt und den Stromfluss über die Elektronik ermöglicht. Diese Varianten, wie beispielsweise in den Druckschriften EP 2 742 565 B1 und US 2018/0006 447 A1 beschrieben, können sowohl in ein Steckverbindergehäuse integriert werden, als auch in einer Steckerleiste oder in einem Schaltschrank untergebracht werden. Die zuletzt beschriebene zentrale Platzierung der Elektronik in einer Steckerleiste oder in einem Schaltschrank hat dabei den Vorteil, dass mit einem Modul beliebig viele Steckverbinder betrieben werden können. Wie beispielsweise im Dokument EP 2 742 565 B1 beschrieben, müssen dann in den Zuleitungen zu jedem der Hilfskontakte entsprechende Dioden verbaut werden, damit kein Kurzschluss zwischen den verschiedenen Strängen mehrerer Steckverbinder entsteht und nur der Strom des derzeit schaltenden Stranges (bzw. zu trennenden oder zu verbindenden Steckverbinders) über die Elektronik fließt.

Durch die im Dokument EP 2 742 565 B1 beschriebenen Dioden können zwar mehrere Steckverbinder parallel mit einem einzigen Elektronikmodul versorgt werden, allerdings funktioniert das nur für unidirektionale Netze. Eine Besonderheit von DC-Netzen ist, dass Energieflüsse bidirektional sein können, wie beispielsweise bei Akkumulatoren (Sekundärzellen), die sowohl Quelle, als auch Verbraucher des Gleichstroms sein können. Ebenso können Elektromaschinen als Verbraucher des Gleichstroms arbeiten, aber auch generatorisch beim Bremsen Energie zurückspeisen. Bei einer bidirektionalen Anwendung, beispielsweise dem Wechsel zwischen motorischem und generatorischem Betrieb einer Elektromaschine, funktioniert die beschriebene Diodenschaltung nicht. Hier müsste mit einem deutlichen Mehraufwand eine aufwändigere Schaltung jedes einzelnen Hilfskontakts umgesetzt werden.

Somit besteht die Aufgabe, eine Steckkontaktvorrichtung zur Vermeidung oder Löschung eines Lichtbogens beim Trennen oder Schließen einer Gleichstromverbindung bereitzustellen, welche sowohl in einem unidirektionalem als auch in einem bidirektionalen Netz betrieben werden kann.

Die Aufgabe wird mit den Merkmalen des unabhängigen Anspruchs gelöst. Zweckmäßige Ausgestaltungen und vorteilhafte Weiterbildungen der Erfindung sind in den abhängigen Ansprüchen angegeben.

Ausführungsbeispiele der Erfindung sind im Folgenden unter teilweiser Bezugnahme auf die Figuren beschrieben.

Gemäß einem Aspekt ist eine Steckkontaktvorrichtung zur Vermeidung oder Löschung eines Lichtbogens beim Trennen oder Schließen einer Gleichstromverbindung bereitgestellt. Die Steckkontaktvorrichtung umfasst mindestens einen Steckverbinder mit jeweils einem Hauptkontakt (HA) und einem Hilfskontakt (HI). Der HA umfasst eine erste Kontakthälfte (HA1) und eine zweite Kontakthälfte (HA2), die lösbar zusammensteckbar sind. Der HA ist dazu ausgebildet, in einem zusammengesteckten Zustand (T₀) des jeweiligen Steckverbinders die HA1 und die HA2 elektrisch leitend zu verbinden. Ferner ist der HA dazu ausgebildet, in einem gelösten Zustand (T₃) des jeweiligen Steckverbinders die HA1 und die HA2 galvanisch zu trennen. Weiterhin ist der HA dazu ausgebildet, in einem ersten Zwischenzustand (T₁) des jeweiligen Steckverbinders zwischen dem zusammengesteckten Zustand (T₀) und dem gelösten Zustand (T₃) die HA1 und die HA2 elektrisch leitend zu verbinden und in einem zweiten Zwischenzustand (T₂) des jeweiligen Steckverbinders zwischen dem ersten Zwischenzustand (T₁) und dem gelösten Zustand (T₃) die HA1 und die HA2 galvanisch zu trennen. Der Hilfskontakt (HI) umfasst eine erste Kontakthälfte (HI1) und eine zweite Kontakthälfte (HI2), die lösbar zusammensteckbar sind. Der HI ist dazu ausgebildet, im zusammengesteckten Zustand (T₀) des jeweiligen Steckverbinders die HI1 und die HI2 galvanisch zu trennen. Ferner ist der HI dazu ausgebildet, im gelösten Zustand (T₃) des jeweiligen Steckverbinders die HI1 und die HI2 galvanisch zu trennen. Weiterhin ist der HI dazu ausgebildet, im ersten Zwischenzustand (T₁) des jeweiligen Steckverbinders die HI1 und die HI2 elektrisch leitend zu verbinden und im zweiten Zwischenzustand (T₂) des jeweiligen Steckverbinders die HI1 und die HI2 elektrisch leitend zu verbinden. Die HA2 und die HI2 sind (vorzugsweise in jedem der 4 Zustände) elektrisch leitend verbunden. Die Steckkontaktvorrichtung umfasst ferner eine elektronische Schalteinheit, deren erster Anschluss mit der HA1 und deren zweiter Anschluss mit der HI1 (vorzugsweise in jedem der 4 Zustände) elektrisch leitend verbunden sind. Die elektronische Schalteinheit ist dazu ausgebildet, in Reaktion auf einen Übergang vom zusammengesteckten Zustand (T₀) in den ersten Zwischenzustand (T₁) den ersten Anschluss und den zweiten Anschluss elektrisch leitend zu verbinden oder eine Impedanz zwischen dem ersten Anschluss und dem zweiten Anschluss zu verkleinern, und in Reaktion auf einen Übergang vom ersten Zwischenzustand (T₁) in den zweiten Zwischenzustand (T₂) und/oder vom zweiten Zwischenzustand (T₂) in den gelösten Zustand (T₃) den ersten Anschluss und den zweiten Anschluss elektrisch zu trennen oder eine Impedanz zwischen dem ersten Anschluss und dem zweiten Anschluss zu vergrößern.

In einem Ausführungsbeispiel der Steckkontaktvorrichtung kann der HA im zusammengesteckten Zustand die HA1 und die HA2 elektrisch leitend verbinden, während der HI im zusammengesteckten Zustand die HI1 und die HI2 galvanisch trennen kann. Im gelösten Zustand können sowohl die HA1 und die HA2 als auch die HI1 und die HI2 jeweils galvanisch getrennt sein. Im ersten Zwischenzustand zwischen T₀ und T₃ können sowohl die HA1 und die HA2 als auch die HI1 und die HI2 jeweils elektrisch leitend verbunden sein. Im zweiten Zwischenzustand zwischen T₁ und T₃ können die HA1 und die HA2 galvanisch getrennt sein, während die HA2 und die HI2 elektrisch leitend verbunden sein können.

Ausführungsbeispiele können eine Steckkontaktvorrichtung ermöglichen, die auf Dioden an Hilfskontakten verzichtet. Um auf die Diode verzichten zu können, ist vorgesehen, dass die Kontakthälften (HI1 und HI2) des Hilfskontakts (HI) im zusammengesteckten Zustand galvanisch getrennt sind, beispielsweise mittels eines teilweise isolierten Stiftkontakt als HI1 oder HI2.

Beispielsweise ist der HI so gestaltet, dass im zusammengesteckten Zustand (beispielsweise einem komplett gesteckten Zustand) keine leitende Verbindung zwischen HI1 und HI2 (beispielsweise Stiftkontakt und Buchsenkontakt) besteht. Erst beim Trennen der Gleichstromverbindung (d.h., einem Übergang in Richtung des gelösten Zustands) wird der Stromkreis über die elektronische Schalteinheit (kurz: Elektronik) geschlossen, vorzugsweise beim Übergang in den ersten Zwischenzustand. Dies geschieht vorzugsweise, bevor an dem voreilenden Hauptkontakt (HA, auch: Lastkontakt) der Lichtbogen entsteht bzw. entstehen würde ohne HI, beispielsweise beim Übergang in den zweiten Zwischenzustand. Der Lichtbogen löst dann die elektronischen Schalteinheit (kurz: Elektronik) aus, beispielsweise aufgrund eines Spannungsabfalls zwischen dem ersten und zweiten Anschluss, woraufhin der Strom über den Hilfskontakt (HI) und die Elektronik geleitet wird. Die Elektronik unterbricht dann direkt (beispielsweise nach einer Zeitspanne, die kürzer ist als eine typische Zeitspanne des Übergangs vom zweiten Zwischenzustand zum gelösten Zustand) den Stromkreis und ermöglicht so ein lastfreies Trennen der elektrischen Verbindung (und/oder lastfreies Öffnen des HI) ohne Lichtbogen. Eine beispielhafte Wirkungsweise der Elektronik ist in der Druckschrift EP 2 742 565 B1 beschrieben.

Bei einer Steckkontaktvorrichtung mit mehreren Steckverbindern, die auch als Stränge bezeichnet werden, können Ausführungsbeispiele der Steckkontaktvorrichtung die Trennung der einzelnen Stränge voneinander durch die elektrische (vorzugsweise physikalische oder galvanische) Trennung der jeweiligen Hilfskontakte (HI) der Steckkontaktvorrichtung im zusammengesteckten Zustand bewerkstelligen.

Hierin kann ein Zustand galvanischer Trennung auch als offener Zustand bezeichnet sein. Ein Zustand elektrisch leitender Verbindung kann auch als geschlossener Zustand bezeichnet sein.

Der mindestens eine Steckverbinder kann zusätzlich zu dem Hauptkontakt (HA) und dem Hilfskontakt (HI), der auch als Steuerkontakt bezeichnet werden kann, einen Gegenpolkontakt (GE), der auch als zweiter Hauptkontakt bezeichnet werden kann, und/oder einen Erdungskontakt (PE, "physical earth") umfassen. Der GE und/oder der PE können jeweils eine erste Kontakthälfte und eine zweite Kontakthälfte umfassen.

Der Hauptkontakt (HA) kann mit dem Pluspol einer Gleichstromquelle verbunden oder verbindbar sein. Der Gegenpolkontakt (GE) kann mit dem Minuspol einer Gleichstromquelle verbunden oder verbindbar sein. Der GE und/oder der PE können im zusammengesteckten Zustand (T₀), im ersten Zwischenzustand (T₁) und im zweiten Zwischenzustand (T₂) elektrisch leitend verbunden und im gelösten Zustand (T₃) galvanisch getrennt sein.

Die elektronische Schalteinheit kann mindestens einen Halbleiterschalter umfassen. Die elektronische Schalteinheit kann mit dem HI des mindestens einen Steckverbinders in Reihe geschaltet sein. Der HI kann mittels der elektronischen Schalteinheit wahlweise parallel zu dem HA geschaltet werden. Die elektronische Schalteinheit kann auch als Löschelektronik bezeichnet werden.

Die elektronische Schalteinheit kann ferner dazu ausgebildet sein, in Reaktion auf einen Übergang vom gelösten Zustand (T₃) in den zweiten Zwischenzustand (T₂) und/oder vom zweiten Zwischenzustand (T₂) in den ersten Zwischenzustand (T₁) den ersten Anschluss und den zweiten Anschluss elektrisch leitend zu verbinden oder eine Impedanz zwischen dem ersten Anschluss und dem zweiten Anschluss zu verkleinern, und in Reaktion auf einen Übergang vom ersten Zwischenzustand (T₁) in den zusammengesteckten Zustand (T₀) den ersten Anschluss und den zweiten Anschlusselektrisch zu trennen oder eine Impedanz zwischen dem ersten Anschluss und dem zweiten Anschluss zu vergrößern.

Die elektronische Schalteinheit kann dazu ausgebildet sein, den ersten Anschluss und den zweiten Anschluss für einen bidirektionalen Stromfluss oder für beide Stromrichtungen elektrisch leitend zu verbinden. Ein bidirektionaler Stromfluss kann durch einen Gleichrichter gewährleistet werden.

Der mindestens eine Steckverbinder kann jeweils eine erste Steckverbinderhälfte und eine zweite Steckverbinderhälfte umfassen. Die erste Steckverbinderhälfte kann die HA1 und die HI1 umfassen. Die erste Steckverbinderhälfte kann ferner eine erste Kontakthälfte GE1 des GE und optional eine erste Kontakthälfte PE1 des PE umfassen. Die zweite Steckverbinderhälfte kann die HA2 und die HI2 umfassen. Die zweite Steckverbinderhälfte kann ferner eine zweite Kontakthälfte GE2 des GE und optional eine zweite Kontakthälfte PE2 des PE umfassen. Die erste Steckverbinderhälfte kann auch als Steckdose bezeichnet werden. Die zweite Steckverbinderhälfte kann auch als Netzstecker bezeichnet werden.

Die erste Steckverbinderhälfte und die zweite Steckverbinderhälfte des jeweiligen Steckverbinders können im zusammengesteckten Zustand mechanisch verbunden sein. Die erste Steckverbinderhälfte und die zweite Steckverbinderhälfte des jeweiligen Steckverbinders können im gelösten Zustand räumlich getrennt sein.

Jede Steckverbinderhälfte kann ein Gehäuse umfassen.

Ein Pol einer Gleichstromquelle der Gleichstromverbindung, vorzugsweise ein Pluspol der Gleichstromquelle, kann mit der HA1 des Hauptkontakts und/oder dem ersten Anschluss der elektronischen Schalteinheit elektrisch leitend verbunden oder verbindbar sein, wobei ein Pol eines elektrischen Verbrauchers, vorzugsweise ein Pluspol des Verbrauchers, mit der HA2 des Hauptkontakts und/oder der HI2 des Hilfskontakts elektrisch leitend verbunden oder verbindbar ist. Alternativ oder ergänzend kann ein Pol einer Gleichstromquelle der Gleichstromverbindung, vorzugsweise ein Pluspol der Gleichstromquelle, mit der HA2 des Hauptkontakts und/oder der HI2 des Hilfskontakts elektrisch leitend verbunden oder verbindbar sein, wobei ein Pol eines elektrischen Verbrauchers, vorzugsweise ein Pluspol des Verbrauchers, mit der HA1 des Hauptkontakts und/oder dem ersten Anschluss der elektronischen Schalteinheit elektrisch leitend verbunden oder verbindbar ist.

Beispielsweise kann die Gleichstromquelle einen wiederaufladbaren elektrischen Energiespeicher (vorzugsweise Sekundärzellen) umfassen und der elektrische Verbraucher kann eine Elektromaschine (E-Maschine) umfassen. Die E-Maschine kann (vorzugsweise temporär) generatorisch betrieben werden, wobei sich die Stromrichtung des Gleichstroms (vorzugsweise zu einer Rekuperation) durch die Steckkontaktvorrichtung umkehrt.

Die HA1 kann einen Stiftkontakt und die HA2 einen Buchsenkontakt umfassen. Alternativ kann die HA2 einen Stiftkontakt und die HA1 einen Buchsenkontakt umfassen. Alternativ oder ergänzend kann die HI1 einen Stiftkontakt und die HI2 einen Buchsenkontakt umfassen. In einer weiteren Alternative oder ergänzend zum HA, kann die HI2 einen Stiftkontakt und die HI1 einen Buchsenkontakt umfassen. Die erste Kontakthälfte (GE1) des Gegenpolkontakts (GE) kann einen Stiftkontakt und die zweite Kontakthälfte (GE2) des GE kann einen Buchsenkontakt umfassen. Alternativ kann die GE2 einen Stiftkontakt und die GE1 einen Buchsenkontakt umfassen. Die erste Kontakthälfte (PE1) des Erdungskontakts (PE oder "physical earth") kann einen Stiftkontakt und die zweite Kontakthälfte (PE2) des PE kann einen Buchsenkontakt umfassen. Alternativ kann die PE2 einen Stiftkontakt und die PE1 einen Buchsenkontakt umfassen.

Ein Außenprofil des Stiftkontakts und/oder ein Innenprofil des Buchsenkontakts des HA und/oder ein Außenprofil des Stiftkontakts und/oder ein Innenprofil des Buchsenkontakts des HI des jeweiligen Steckverbinders können einen runden, ovalen oder mehreckigen Querschnitt aufweisen. Alternativ oder ergänzend können der HA und der HI des jeweiligen Steckverbinders hermaphroditisch sein.

Der HA und der HI können jeweils eine Längsachse aufweisen. Die HA1 und die HA2 sowie die HI1 und die HI2 können jeweils entlang ihrer Längsachse zusammensteckbar und lösbar sein. Die Längsachse des HAs und die Längsachse des HIs können zueinander parallel sein. Alternativ oder ergänzend kann die HA1 und die HA2 und/oder die HI1 und die HI2 jeweils entlang einer Querachse, die quer oder senkrecht zur Längsachse ist, zusammensteckbar und lösbar sein.

Eine Ausdehnung der (lastenseitigen) HI2 oder (gleichstromquellenseitigen) HI1 des HI bezüglich einer Kontaktstelle der (gleichstromquellenseitigen) HI1 bzw. (lastenseitigen) H12, die der (lastenseitigen) HI2 oder (gleichstromquellenseitigen) HI1 des jeweiligen HI zugeordnet ist, kann länger sein als eine Ausdehnung der (lastenseitige) HA2 oder (gleichstromquellenseitigen) HA1 des HA bezüglich einer Kontaktstelle der (gleichstromquellenseitigen) HA1 bzw. (lastenseitige) HA2 , die der (lastenseitigen) HA2 oder (gleichstromquellenseitigen) HA1 des jeweiligen HA zugeordnet ist. Die jeweilige Ausdehnung entlang der Längsachse in der Richtung des Zusammensteckens kann im zusammengesteckten Zustand bestimmt sein. Eine lastenseitige Kontakthälfte kann durch die elektrisch leitende Verbindung von HA2 und HI2 bestimmt sein. Eine gleichstromquellenseitige Kontakthälfte kann durch die Reihenschaltung von HI1 mit der elektronischen Schalteinheit und deren elektrisch leitende Verbindung mit der HA1 bestimmt sein. Beispielsweise können die lastenseitigen HA2 und HI2 jeweils Stiftkontakte umfassen. Die Ausdehnung der Stiftkontakte kann von der Kontaktstelle des jeweiligen Buchsenkontakts HA1 bzw. HI1 (beispielsweise als Nullpunkt) aus eine Länge des jeweiligen Stiftkontakts in (gleichstromseitiger) Steckrichtung im zusammengesteckten Zustand umfassen. Der Stiftkontakt des HA kann kürzer sein als der Stiftkontakt des HI.

Die HI2 oder die HI1 des HI des mindestens einen Steckverbinders kann einen Trennabschnitt umfassen. Der Trennabschnitt kann im zusammengesteckten Zustand (T₀) des jeweiligen Steckverbinders eine galvanische Trennung von der Kontaktstelle der HI1 oder der HI2, die der HI2 oder der HI1 des HI zugeordnet ist, bewirken.

Eine Ausdehnung des Trennabschnitts der HI2 oder der HI1 kann eine entlang einer Teilausdehnung der HI2 bzw. HI1 umlaufende Isolierung umfassen. Die Teilausdehnung der HI2 bzw. HI1 kann kürzer sein als die Ausdehnung der HA2 oder der HA1 des HA bezüglich einer Kontaktstelle der HA1 bzw. HA2, die der HA2 oder der HA1 des jeweiligen HA zugeordnet ist. Die jeweilige Ausdehnung entlang der Längsachse kann in der Richtung des Zusammensteckens im zusammengesteckten Zustand bestimmt sein. Beispielsweise kann die HI2 einen Stiftkontakt mit einer umlaufenden Isolierung als Trennabschnitt umfassen. Der Trennabschnitt kann eine äußere (aus Sicht der Zusammensteck-Richtung) Teillänge des Stiftkontakts umfassen.

Die HA1 oder die HA2 des HA kann entlang der Längsachse nur eine Kontaktstelle aufweisen. Alternativ oder ergänzend kann die HI1 oder die HI2 des HI entlang der Längsachse nur eine Kontaktstelle aufweisen.

Die elektronische Schalteinheit kann mindestens einen Halbleiterschalter umfassen, der dazu ausgebildet ist, bei Anliegen einer elektrischen Spannung zwischen dem ersten Anschluss und dem zweiten Anschluss die Impedanz zwischen dem ersten Anschluss und dem zweiten Anschluss zu verkleinern oder den ersten Anschluss und den zweiten Anschluss elektrisch leitend zu verbinden.

Die elektronische Schalteinheit kann zum bidirektionalen Stromfluss zwischen dem ersten Anschluss und dem zweiten Anschluss ausgebildet sein. Vorzugsweise kann die elektronische Schalteinheit zum bidirektionalen Stromfluss eine Gleichrichterbrücke umfassen. Die elektronische Schalteinheit kann eine Gleichrichterbrücke umfassen, die mit dem mindestens einen Halbleiterschalter verkettet ist. Beispielsweise ist mit einem oder mehreren Halbleiterschaltern, welche den ersten Anschluss und den zweiten Anschluss wahlweise elektrisch leitend verbinden und trennen bzw. die Impedanz zwischen dem ersten Anschluss und dem zweiten Anschluss wahlweise vergrößern und verkleinern, eine Gleichrichterbrücke verkettet. Zwei gegenüberliegende Anschlüsse der Gleichrichterbrücke können den ersten Anschluss und den zweiten Anschluss der elektronischen Schalteinheit umfassen. Zwei weitere gegenüberliegende Anschlüsse der Gleichrichterbrücke können über einen Halbleiterschalter und/oder ein RC-Glied und/oder einen Kondensator und/oder einen Varistor und/oder einen Thermistor miteinander verbunden oder verbindbar sein.

Die elektronische Schalteinheit kann ferner zwei in zueinander entgegengesetzter Richtung miteinander in Reihe geschaltete Halbleiterschalter umfassen, denen jeweils in Sperrichtung eine Diode parallel geschaltet ist. Die jeweils parallel geschaltete Diode kann in Sperrrichtung des Halbleiterschalters als Bypass wirken. Optional kann die elektronische Schalteinheit ferner einen Trigger-Schaltkreis umfassen, der dazu ausgebildet ist, bei Anliegen der elektrischen Spannung zwischen dem ersten Anschluss und dem zweiten Anschluss ein Schließen eines Halbleiterschalters zu bewirken. Weiterhin optional kann der Trigger-Schaltkreis die Gleichrichterbrücke umfassen.

Alternativ oder ergänzend kann die elektronische Schalteinheit einen Metall-Oxid-Halbleiter-Feldeffekttransistor (MOSFET) und/oder einen Bipolartransistor mit isolierter Gate-Elektrode (IGBT) und/oder ein RC-Glied mit einem Kondensator und einem veränderlichen Widerstand, beispielsweise einem Varistor und/oder einem Thermistor, umfassen.

Die Steckkontaktvorrichtung kann mindestens zwei Steckverbinder mit jeweils einem HA und einem HI und eine elektronische Schalteinheit umfassen. Der erste Anschluss der elektronischen Schalteinheit kann mit der HA1 jedes HA elektrisch leitend verbunden sein. Der zweite Anschluss der elektronischen Schalteinheit kann mit der HI1 jedes HI elektrisch leitend verbunden sein. Die jeweiligen ersten Steckverbinderhälften der mindestens zwei Steckverbinder können an dieselbe Gleichstromquelle angeschlossen sein und/oder parallelgeschaltet sein.

Der mindestens eine Steckverbinder kann ferner einen Gegenpolkontakt (GE) mit einer ersten Kontakthälfte (GE1) und einer zweiten Kontakthälfte (GE2), umfassen für einen Gegenpol der Gleichstromverbindung bezüglich des HA, vorzugsweise wobei der GE dazu ausgebildet ist, im zusammengesteckten Zustand (T₀) des jeweiligen Steckverbinders, im ersten Zwischenzustand (T₁) des jeweiligen Steckverbinders und im zweiten Zwischenzustand (T₂) des jeweiligen Steckverbinders die GE1 und die GE2 elektrisch leitend zu verbinden. Die Kontakthälften GE1 oder GE2 können länger sein als die Kontakthälften HA1 oder HA2 des HA. Insbesondere kann die Kontakthälfte GE1 oder GE2 des GE dieselbe Länge haben wie eine Kontakthälfte HI1 oder HI2 des HI.

Weitere Merkmale und Vorteile der Erfindung werden im Folgenden unter Bezugnahme auf die beigefügten Zeichnungen beschrieben. Es zeigen:
- Fig. 1: ein aus dem Stand der Technik bekanntes Mehrfachstecksystem;
- Fig. 2: ein Ausführungsbeispiel einer Steckkontaktvorrichtung mit einem Hauptkontakt und einem Hilfskontakt mit elektronischer Schalteinheit;
- Fig. 3: ein zweites Ausführungsbeispiel einer Steckkontaktvorrichtung mit einem Hauptkontakt und einem Hilfskontakt mit elektronischer Schalteinheit;
- Fig. 4A bis 4C: einen beispielhaften Trennvorgang eines Ausführungsbeispiels der Steckkontaktvorrichtung;
- Fig. 5: ein drittes Ausführungsbeispiel der Steckkontaktvorrichtung als beispielhaftes Mehrfachstecksystem; und
- Fig. 6A und 6B: zwei Ausführungsbeispiele einer bidirektionalen elektronischen Schalteinheit.

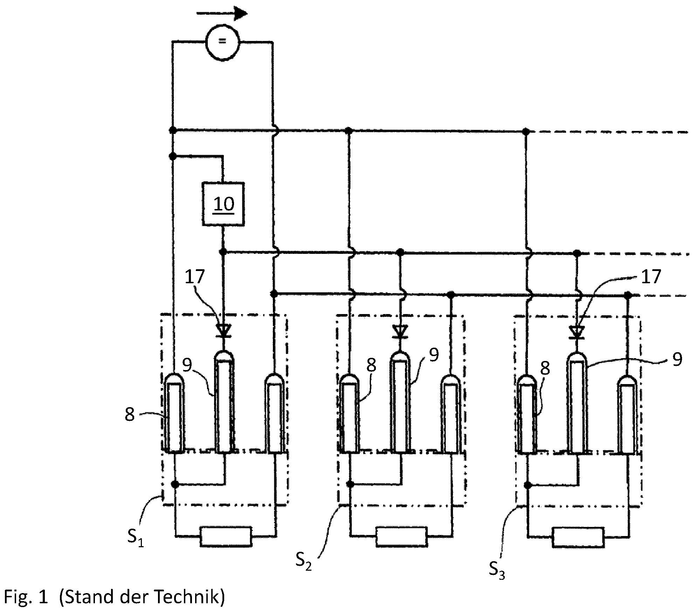

Fig. 1 zeigt schematisch ein aus dem Dokument EP 2 742 565 B1 bekanntes mechatronisches Mehrfachstecksystem. Das Mehrfachstecksystem umfasst mindestens zwei Steckverbinder S₁, S₂ ..., die jeweils einen Hauptkontakt 8 mit einem Hauptsteckkontakt und mit einem Hauptgegenkontakt sowie jeweils einen dem Hauptkontakt 8 bei einem Aussteckvorgang nacheilenden Hilfskontakt 9 mit einem Hilfssteckkontakt und mit einem Hilfsgegenkontakt aufweisen. Ferner umfasst das Mehrfachstecksystem des Dokuments EP 2 742 565 B1 zur Löschung eines im Zuge eines Aussteckvorgangs entstehenden Lichtbogens eine einzige, den Steckverbindern S₁, S₂ ... gemeinsame Halbleiterelektronik 10, die mit dem Hilfskontakt 9 jedes Steckverbinders S₁, S₂ ... über eine Diode 17 zur Vermeidung eines Kurzschlusses, beispielsweise der Steckverbinder S₂ und S₃, im Zuge eines Aussteckvorgangs eines oder mehrerer einzelner Steckverbinder, beispielsweise S₁, in Reihe geschaltet ist, und wobei die Halbleiterelektronik 10 zwei in Reihe geschaltete Halbleiterschalter und einen mit den Halbleiterschaltern verbundenen Energiespeicher aufweist, der zum Aufladen die im Zuge des Aussteckvorgangs entstehende Lichtbogenspannung zwischen den Halbleiterschaltern abgreift.

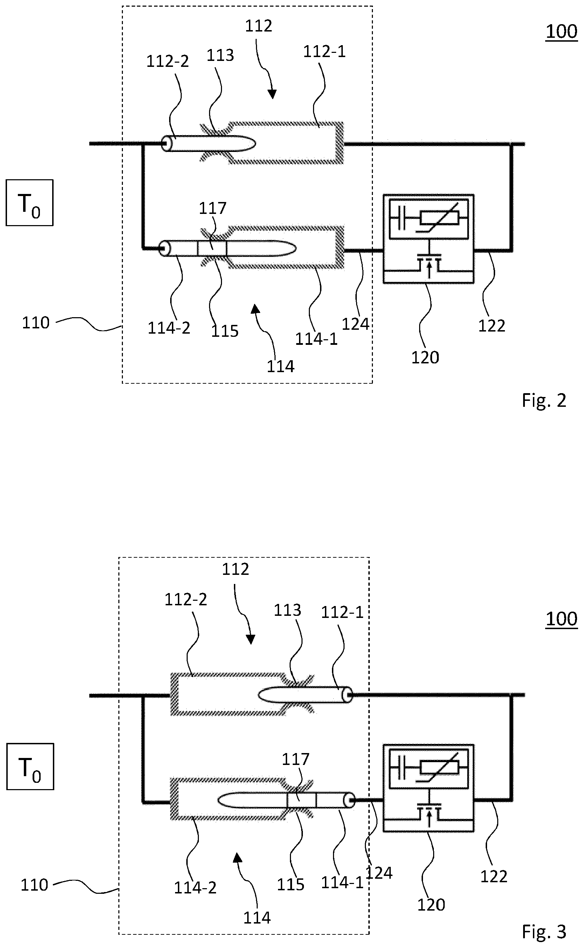

Fig. 2 zeigt ein Ausführungsbeispiel einer allgemein mit Bezugszeichen 100 bezeichneten Steckkontaktvorrichtung zur Vermeidung oder Löschung eines Lichtbogens beim Trennen oder Schließen einer Gleichstromverbindung. Die Steckkontaktvorrichtung 100 umfasst einen allgemein mit Bezugszeichen 110 bezeichneten Steckverbinder mit einem Hauptkontakt (HA) 112 mit einer als Buchsenkontakt ausgebildeten ersten Kontakthälfte (HA1) 112-1 und einer als Stiftkontakt ausgebildeten zweiten Kontakthälfte (HA2) 112-2. Ferner umfasst der Steckverbinder 110 einen Hilfskontakt (HI) 114 mit einer als Buchsenkontakt ausgebildeten ersten Kontakthälfte (HI1) 114-1 und einer als Stiftkontakt ausgebildeten zweiten Kontakthälfte (H12) 114-2. Die HA2 112-2 und HI2 114-2 sind elektrisch leitend verbunden. Eine elektronische Schalteinheit 120 ist über einen ersten Anschluss 122 parallel zum Buchsenkontakt (HA1) 112-1 geschaltet. Der HI 114 ist über einen zweiten Anschluss 124 in Reihe geschaltet mit der elektronischen Schalteinheit 120. Die Steckkontaktvorrichtung 100 ist in Fig. 2 im zusammengesteckten Zustand T₀ gezeigt, in dem der Stiftkontakt (HA2) 112-2 mit dem Buchsenkontakt (HA1) 112-1 über die Kontaktstelle 113 elektrisch leitend verbunden ist. Der Stiftkontakt (HI2) 114-2 ist im in Fig. 2 gezeigten zusammengesteckten Zustand T₀ durch einen Trennabschnitt 117, der eine umlaufende Isolierung umfasst, von der Kontaktstelle 115 des Buchsenkontakts (HI1) 114-1 galvanisch getrennt.

Die elektronische Schalteinheit 120 in Fig. 2 umfasst ein RC-Glied ("Resistor Capacitor"). Das RC-Glied kann als Metall-Oxid-Halbleiter-Feldeffekttransistor (MOSFET) oder Bipolartransistor mit isolierter Gate-Elektrode (IGBT) ausgebildet sein. Alternativ oder ergänzend können auch mehrere RC-Glieder, beispielsweise ein IGBT und ein MOSFET, in Reihe geschaltet sein. Optional umfasst die elektronische Schalteinheit ferner eine Gleichrichterbrücke (nicht gezeigt), die einen bidirektionalen Stromfluss in dem Gleichstromsystem ermöglicht. Durch eine Umkehr der Stromrichtung kann beispielsweise Bremsenergie einer generatorisch betriebenen Elektromaschine rekuperiert werden.

Fig. 3 zeigt ein zweites Ausführungsbeispiel einer allgemein mit Bezugszeichen 100 bezeichneten Steckkontaktvorrichtung zur Vermeidung oder Löschung eines Lichtbogens beim Trennen oder Schließen einer Gleichstromverbindung im zusammengesteckten Zustand T₀. Gleiche Komponenten der Steckkontaktvorrichtung wie in Fig. 2 sind mit denselben Bezugszeichen bezeichnet. Der allgemein mit Bezugszeichen 110 bezeichnete Steckverbinder in Fig. 3 umfasst eine im Vergleich zu Fig. 2 umgekehrte Zuordnung von Stiftkontakten und Buchsenkontakten zu den ersten und zweiten Kontakthälften des HA und des HI.

In einem dritten Ausführungsbeispiel (ohne Figur) ist der allgemein mit Bezugszeichen 110 bezeichnete Steckverbinder hermaphroditisch ausgebildet. In einer ersten Variante eines hermaphroditischen Steckverbinders 110 umfasst die HA1 112-1 einen Buchsenkontakt wie in Fig. 2 gezeigt und die HI1 114-1 einen Stiftkontakt wie in Fig. 3 gezeigt. In einer zweiten Variante eines hermaphroditischen Steckverbinders 110 umfasst die HA1 112-1 einen Stiftkontakt wie in Fig. 3 gezeigt und die HI1 114-1 einen Buchsenkontakt wie in Fig. 2 gezeigt.

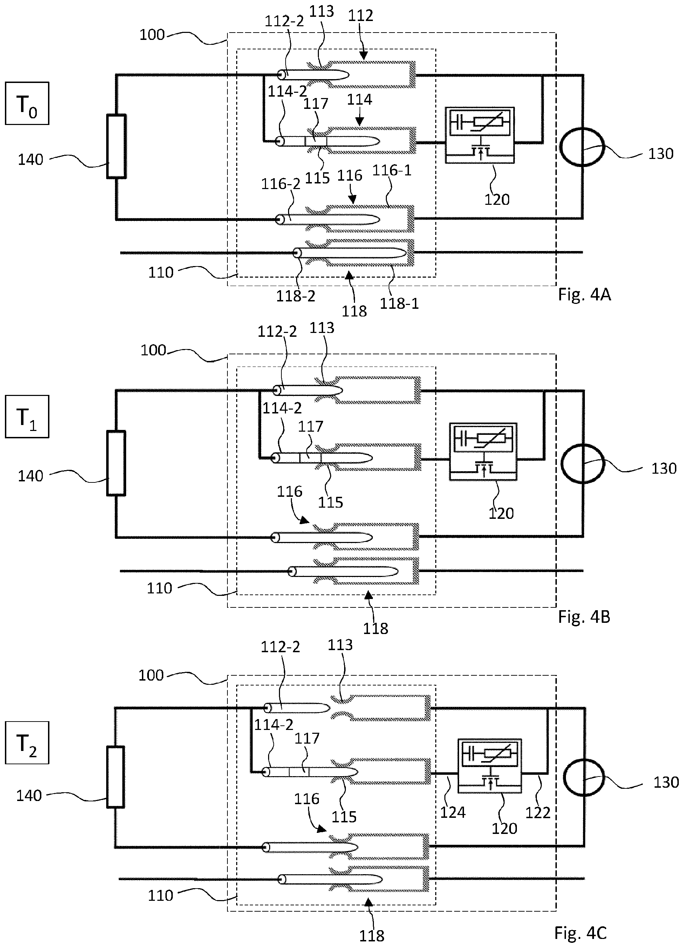

Fig. 4A bis Fig. 4C zeigen jeweils eine Steckkontaktvorrichtung 100, deren Steckverbinder 110 einen HA 112, einen HI 114, einen Gegenpolkontakt (GE) 116 und einen Erdungskontakt (PE) 118 umfasst. Der HI 112 ist wie in Fig. 2 gezeigt mit einer elektronischen Schalteinheit 120 in Reihe geschaltet. Die ersten Kontakthälften HA1 der HA 112 und HI1 der HI 114 sind mit einem Pol, vorzugsweise dem Pluspol, einer Gleichstromquelle 130 verbunden oder verbindbar, wobei der HI 114 mit einer elektronischen Schalteinheit 120 in Reihe geschaltet ist, welche mit dem HA 112 elektrisch leitend verbunden ist. Die erste Kontakthälfte GE1 116-1 des Gegenpolkontakts (GE) 116 ist mit einem zweiten Pol, vorzugsweise dem Minuspol, der Gleichstromquelle 130 verbunden oder verbindbar. Ferner umfasst der Steckverbinder 110 in den Fig. 4A bis 4C einen Erdungskontakt (PE) 118 mit erster Kontakthälfte (PE1) 118-1 und zweiter Kontakthälfte (PE2) 118-2. Die zweiten Kontakthälften HA2 112-2, HI2 114-2 und GE2 116-2 sind mit einer Last 140 verbunden.

Fig. 4A zeigt die Steckkontaktvorrichtung 100 im zusammengesteckten Zustand T₀. Die Kontakte HA 112, GE 116 und PE 118 sind elektrisch leitend verbunden. Der Kontakt HI 114 ist mittels des Trennabschnitts 117, beispielsweise einer umlaufenden Isolierung, galvanisch getrennt. Die Pluspolseite der Steckkontaktvorrichtung 100 in Fig. 4A stimmt mit derjenigen in Fig. 2 überein.

Fig. 4B zeigt die Steckkontaktvorrichtung 100 im ersten Zwischenzustand T₁, beispielsweise beim Trennen der Gleichstromverbindung, wobei der Steckverbinder 110 nicht mehr vollständig zusammengesteckt ist. Die HA2 112-2 ist weiterhin elektrisch leitend mit der HA1 112-1 über die Kontaktstelle 113 verbunden. Die HI2 114-2 ist nun mit der HI1 114-1 über die Kontaktstelle 115 leitend verbunden. Die elektronische Schalteinheit 120 ist im ersten Zwischenzustand T₁ passiv. Insbesondere kann der Widerstand des RC-Glieds der elektronischen Schalteinheit 120 im ersten Zwischenzustand T₁ hochohmig sein.

Fig. 4C zeigt die Steckkontaktvorrichtung 100 im zweiten Zwischenzustand T₂, in dem der Steckverbinder 110 noch nicht vollständig getrennt ist. Der HA 112 ist nun galvanisch getrennt, indem die HA2 112-2 räumlich von der Kontaktstelle 113 getrennt ist. Zwischen der HA2 112-2 und der Kontaktstelle 113 der HA1 112-1 entsteht ein Lichtbogen. Über den ersten Anschluss 122 wird die elektronische Schalteinheit 120 aktiviert. Die Aktivierung bewirkt, dass die elektronische Schalteinheit 120 (oder ihr RC-Glied) leitend wird. Insbesondere kann das RC-Glied in dem zweiten Zwischenzustand T₂ niederohmig sein. Die HI 114 ist weiter über die Kontaktstelle 115 leitend verbunden. Der Gleichstrom fließt nun von der Gleichstromquelle 130 aus über die elektronische Schalteinheit 120 und den HI 114. Vorzugsweise umfasst die elektronische Schalteinheit 120 ein Zeitglied, welches bewirkt, dass der Stromfluss über den HI 114 nach einer vorbestimmten Zeitspanne unterbrochen wird. Die Unterbrechung des Stromflusses kann zeitlich vor einer galvanischen Trennung der HI 114, GE 116 und PE 118 erfolgen.

In einem optionalen (nicht gezeigten) dritten Zwischenzustand sind die Kontakte HA 112, HI 114 und GE 116 galvanisch getrennt, während der Erdungskontakt PE 118 noch elektrisch leitend verbunden ist. Im (nicht gezeigten) gelösten Zustand T₃ sind alle Kontakte HA 112, HI 114, GE 116 und PE 118 galvanisch getrennt. In dem gelösten Zustand T₃ können die beiden Kontakthälften 110-1 und 110-2 des Steckverbinders 110 räumlich getrennt sein.

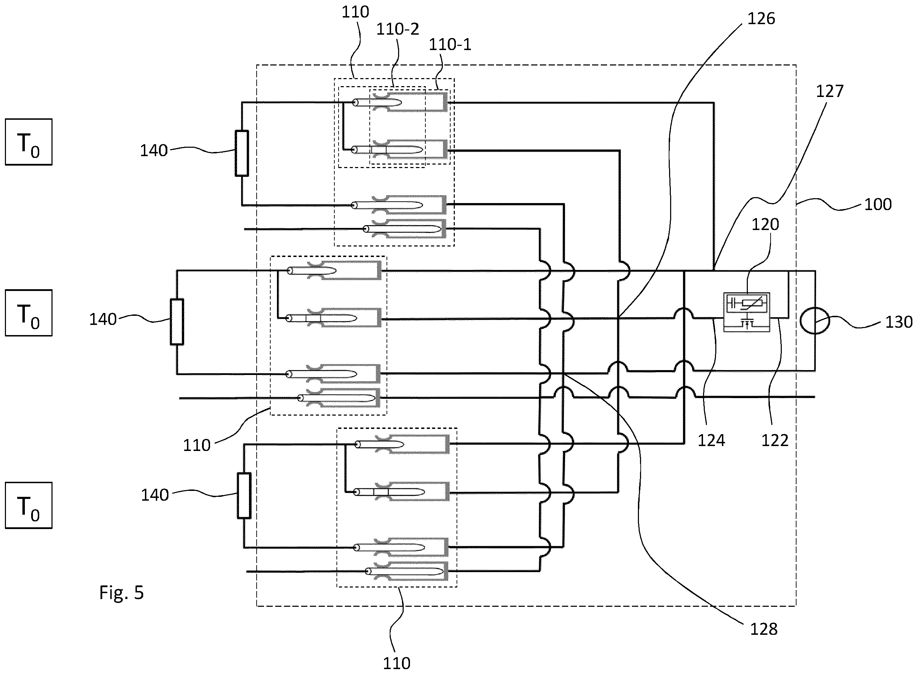

Fig. 5 zeigt eine Steckkontaktvorrichtung 100 mit drei Steckverbindern 110. Jeder Steckverbinder 110 ist baugleich zu dem Steckverbinder 110 gemäß Fig. 4A und im zusammengesteckten Zustand T₀ dargestellt. Jeder HI 114 ist im zusammengesteckten Zustand T₀ durch den Trennabschnitt 117 galvanisch getrennt. Auf der Seite der Gleichstromquelle 130 sind die HI 114 aller Steckverbinder 110 am Punkt 126 parallelgeschaltet, so dass alle HI 114 mit nur einer (gemeinsamen) elektronischen Schalteinheit 120 über den zweiten Anschluss 124 elektrisch leitend verbunden sind. Die (gemeinsame) elektronische Schalteinheit 120 ist mit den am Punkt 127 parallelgeschalteten HA 112 aller Steckverbinder 110 elektrisch leitend verbunden. Die GE 118 aller Steckverbinder 110 sind am Punkt 128 parallelgeschaltet.

Wird ein erster der Steckverbinder 110 getrennt, so wird wie mit Bezug auf Fig. 4A bis 4C beschrieben der zugehörige HI 114 in die leitenden ersten und zweiten Zwischenzustände T₁ und T₂ überführt und eine Verbindung mit der elektronischen Schalteinheit 120 hergestellt. Die Steckverbinder 110 in den anderen (zusammengesteckten) Strängen sind von der Trennung des ersten Steckverbinders 110 und dem resultierenden Lichtbogen im zugehörigen HA 112 sowie Stromfluss im zugehörigen HI 114 nicht betroffen, da ihre jeweiligen HI 114 weiterhin galvanisch von der (gemeinsamen) elektronischen Schalteinheit 120 getrennt sind. Es gibt im Normalbetrieb also keinen Kurzschluss zwischen verschiedenen Strängen. Wie in dem Patent von ETA besteht weiterhin eine Problematik analog zu der in der Patentschrift EP 2 742 565 B1 beschriebenen nur, wenn mehr als ein Steckverbinder 110 gleichzeitig getrennt werden können. Werden zwei (oder mehr) Steckverbinder 110 gleichzeitig gezogen, so kann ein Kurzschluss zwischen diesen beiden (oder mehr) Strängen auftreten.

Die Ausführungsbeispiele der Fig. 4A bis 4C und Fig. 5 weisen Buchsenkontakte als HA1 112-1, HI1 114-1, GE1 116-1 und PE1 118-1 und Stiftkontakte als HA2 112-2, HI 112-2, GE2 116-2 und PE2 118-2 auf. Weitere (nicht gezeigte) Ausführungsbeispiele entsprechen der Vertauschung von Stiftkontakten und Buchsenkontakten wie in Fig. 3. Ferner sind beliebige hermaphrodite Kombinationen der Steckverbinderhälften möglich.

Durch die Steckkontaktvorrichtung 100, insbesondere durch den Trennabschnitt 117 des Hilfskontakts HI 114, können weitere Bauteile, insbesondere Dioden in oder an der ersten Kontakthälfte HI1 114-1, vermieden werden.

Das (beispielsweise im Ausführungsbeispiel der Fig. 5 gezeigte) Mehrfachstecksystem kann auf Gebäudeinstallationsebene hoch skaliert werden. Die elektronische Schalteinheit (beispielsweise die Schalteinheit 120) wird dementsprechend nicht in einem Mehrfachstecksystem integriert, sondern beispielsweise zentral in einer Unterverteilung eines Raumes oder einer Etage. Daher muss der beschriebene Hilfskontakt (beispielsweise HI 114) über eine zusätzliche Leitung mit der elektronischen Schalteinheit (beispielsweise Schalteinheit 120) verbunden werden. Da es sich nicht um eine Steuerleitung oder Signalleitung handelt, kann diese Verbindung auch als X-Leiter bezeichnet werden.

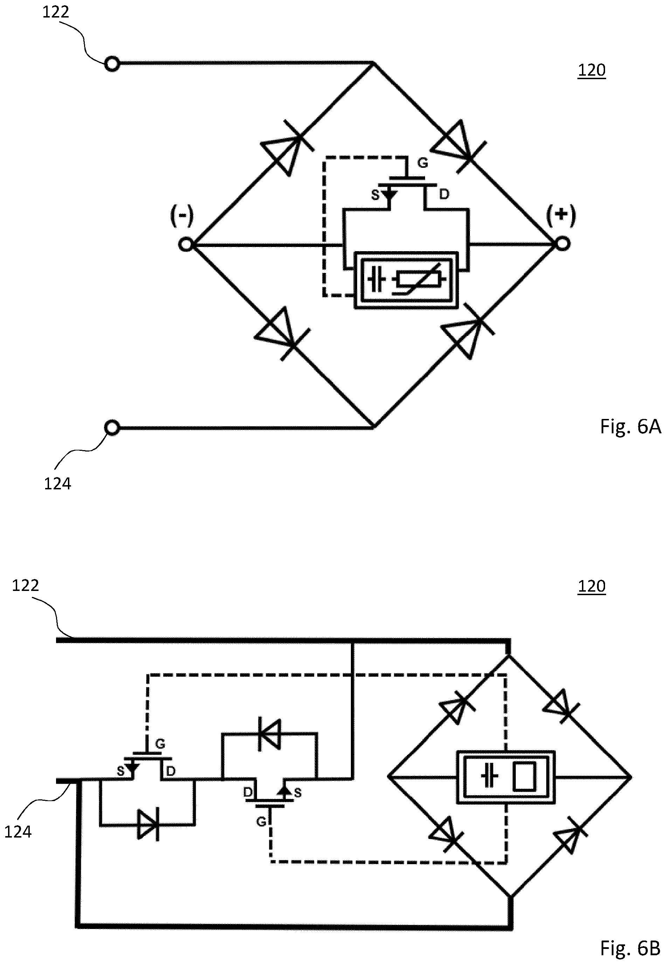

Fig. 6A und 6B zeigen zwei Ausführungsbeispiele einer bidirektionalen elektronischen Schalteinheit 120, die eine Gleichrichterbrücke umfasst. Die Gleichrichterbrücke ist über einen ersten Anschluss 122 mit der HA1 112-1 und über einen zweiten Anschluss 124, 224 mit der HI1 114-1 verbindbar.

Die beiden weiteren (inneren) Anschlüsse der Gleichrichterbrücke sind im in Fig. 6A gezeigten Ausführungsbeispiel über eine Parallelschaltung eines Halbleiterschalters und eines RC-Glieds mit variablem Widerstand miteinander verbunden, wobei die Impedanz des Halbleiterschalters mittels eines Steuersignals (gestrichelt gezeichnet) geändert werden kann. Über die Dioden der Gleichrichterbrücke wird unabhängig von einer außen (an dem ersten und zweiten Anschluss) anliegenden Polarität an den (beiden weiteren) inneren Anschlüssen eine spezifische Polarität sichergestellt und ein bidirektionaler Stromfluß durch den HA 112 und den HI 114 ermöglicht.

In dem in Fig. 6B gezeigten Ausführungsbeispiel umfasst die elektronische Schalteinheit 120 einen Verpolschutz, der zwei in entgegengesetzter Richtung miteinander in Reihe geschalteten Halbleiterschalter und jeweils eine in Sperrrichtung parallel geschaltete Diode umfasst (links in Fig. 6B). Die jeweils parallel geschaltete Diode wirkt in Sperrrichtung des Halbleiterschalters als Bypass. Ferner umfasst die elektronische Schalteinheit 120 in Fig. 6B einen Trigger-Schaltkreis, der die beiden weiteren (inneren) Anschlüsse der Gleichrichterbrücke (rechts in Fig. 6B) verbindet. Der Trigger-Schaltkreis verändert (z.B. verringert) abhängig von einer außen anliegenden Polarität die Impedanz eines oder beider der zwei in Reihe geschalteten Halbleiterschalter mittels (gestrichelt dargestellter) Steuersignale. Alternativ kann auch ein unipolarer Halbleiterschalter verwendet werden.

Die Zuleitung zu der elektronischen Schalteinheit (beispielsweise Schalteinheit 120) zu verlängern, ist für jemanden mit technischem Hintergrund womöglich noch offensichtlich und stellt für sich alleine keine technische Neuerung dar. Jedoch muss im Stand der Technik, beispielsweise in der Patentschrift EP 2 742 565 B1, jeder Steckverbinder (beispielsweise bestehend aus gleichstromquellenseitiger Buchseneinheit 4 und lastenseitiger Steckereinheit 5) mit einer Diode 7, entweder im Steckverbinder, oder zumindest irgendwo in der (als Steuerleitung ausgebildeten) Hilfsleitung ausgestattet werden. In der erfindungsgemäßen Steckkontaktvorrichtung 100 werden diese Dioden durch eine sichere galvanische Trennung in den Hilfskontakten (beispielsweise den HI 114) ersetzt. Der Hilfskontakt (beispielsweise HI 114) weist dazu einen (isolierenden) Trennabschnitt 117 auf, der im zusammengesteckten Zustand die metallischen Kontaktpartner von Stiftkontakt und Buchsenkontakt voneinander trennt. Die Ausgestaltung in Form von rundem Stift und runder Buchse ist dabei nur exemplarisch. So ein Isolator kann auch bei hermaphroditischen Kontakten oder bei Flachkontakten eingesetzt werden. Da im zusammengesteckten Zustand die Hilfskontakte (beispielsweise HI 114) aller Steckverbinder (beispielsweise Steckverbinder 110) auf dem jeweiligen (isolierten) Trennabschnitt 117 der Hilfskontakte in Ruheposition sind, kann somit auch kein Kurzschluss zwischen verschiedenen Steckverbindern entstehen. Erst beim Trennvorgang eines Steckverbinders wird eine leitende Verbindung zu der elektronischen Schalteinheit (beispielsweise der Schalteinheit 120) hergestellt.

### Bezugszeichenliste

| | |
|---|---|
| DC-Quelle | 2 |
| Last | 3 |
| Buchseneinheit | 4 |
| Steckereinheit | 5 |
| Hinleiter | 6 |
| Rückleiter | 7 |
| Hauptkontakt | 8 |
| Hilfskontakt | 9 |
| Elektronik | 10 |
| Bypass/-leitung | 11, 12 |
| Dritter Kontakt | 13 |
| Leitung | 14, 15, 16 |
| Diode | 17 |
| Steckkontaktvorrichtung | 100 |
| Steckverbinder | 110 |
| Erste Steckverbinderhälfte | 110-1 |
| Zweite Steckverbinderhälfte | 110-2 |
| Hauptkontakt | 112 |
| Erste Kontakthälfte des Hauptkontakts | 112-1 |
| Zweite Kontakthälfte des Hauptkontakts | 112-2 |
| Kontaktstelle des Hauptkontakts | 113 |
| Hilfskontakt | 114 |
| Erste Kontakthälfte des Hilfskontakts | 114-1 |
| Zweite Kontakthälfte des Hilfskontakts | 114-2 |
| Kontaktstelle des Hilfskontakts | 115 |
| Gegenpolkontakt | 116 |
| Erste Kontakthälfte des Gegenpolkontakts | 116-1 |
| Zweite Kontakthälfte des Gegenpolkontakts | 116-2 |
| Trennabschnitt | 117 |
| Erdungskontakt | 118 |
| Erste Kontakthälfte des Erdungskontakts | 118-1 |
| Zweite Kontakthälfte des Erdungskontakts | 118-2 |
| Elektronische Schalteinheit | 120 |
| Erster Anschluss | 122 |
| Zweiter Anschluss | 124 |
| Parallelschaltung von Hilfskontakten | 126 |
| Parallelschaltung von Hauptkontakten | 127 |
| Parallelschaltung von Gegenpolkontakten | 128 |
| Gleichstromquelle | 130 |
| Last | 140 |
| Zusammengesteckter Zustand | T₀ |
| Erster Zwischenzustand | T₁ |
| Zweiter Zwischenzustand | T₂ |

## Patentansprüche

1. Steckkontaktvorrichtung (100) zur Vermeidung oder Löschung eines Lichtbogens beim Trennen oder Schließen einer Gleichstromverbindung, umfassend:
mindestens einen Steckverbinder (110) mit jeweils einem Hauptkontakt, HA (112), und einem Hilfskontakt, HI (114),
wobei der HA (112) eine erste Kontakthälfte, HA1 (112-1), und eine zweite Kontakthälfte, HA2 (112-2), umfasst, die lösbar zusammensteckbar sind, wobei der HA (112) dazu ausgebildet ist,
- in einem zusammengesteckten Zustand (T₀) des jeweiligen Steckverbinders (110) die HA1 (112-1) und die HA2 (112-2) elektrisch leitend zu verbinden,
- in einem gelösten Zustand des jeweiligen Steckverbinders (110) die HA1 (112-1) und die HA2 (112-2) galvanisch zu trennen,
- in einem ersten Zwischenzustand (T₁) des jeweiligen Steckverbinders (110) zwischen dem zusammengesteckten Zustand (T₀) und dem gelösten Zustand die HA1 (112-1) und die HA2 (112-2) elektrisch leitend zu verbinden und
- in einem zweiten Zwischenzustand (T₂) des jeweiligen Steckverbinders (110) zwischen dem ersten Zwischenzustand (T₁) und dem gelösten Zustand die HA1 (112-1) und die HA2 (112-2) galvanisch zu trennen,
wobei der Hilfskontakt, HI (114), eine erste Kontakthälfte, HI1 (114-1), und eine zweite Kontakthälfte, HI2 (114-2), umfasst, die lösbar zusammensteckbar sind,
wobei der HI (114) dazu ausgebildet ist,
- im zusammengesteckten Zustand (T₀) des jeweiligen Steckverbinders die HI1 (114-1) und die HI2 (114-2) galvanisch zu trennen,
- im gelösten Zustand des jeweiligen Steckverbinders die HI1 (114-1) und die HI2 (114-2) galvanisch zu trennen,
- im ersten Zwischenzustand (T₁) des jeweiligen Steckverbinders die HI1 (114-1) und die HI2 (114-2) elektrisch leitend zu verbinden und
- im zweiten Zwischenzustand (T₂) des jeweiligen Steckverbinders die HI1 (114-1) und die HI2 (114-2) elektrisch leitend zu verbinden,
und wobei die HA2 (112-2) und die HI2 (114-2) elektrisch leitend verbunden sind; und
eine elektronische Schalteinheit (120), deren erster Anschluss (122) mit der HA1 (112-1) und deren zweiter Anschluss (124) mit der HI1 (114-1) elektrisch leitend verbunden sind, wobei die elektronische Schalteinheit (120) dazu ausgebildet ist, in Reaktion auf einen Übergang vom zusammengesteckten Zustand (T₀) in den ersten Zwischenzustand (T₁) den ersten Anschluss (122) und den zweiten Anschluss (124) elektrisch leitend zu verbinden oder eine Impedanz zwischen dem ersten Anschluss (122) und dem zweiten Anschluss (124) zu verkleinern, und in Reaktion auf einen Übergang vom ersten Zwischenzustand (T₁) in den zweiten Zwischenzustand (T₂) und/oder vom zweiten Zwischenzustand (T₂) in den gelösten Zustand den ersten Anschluss (122) und den zweiten Anschluss (124) elektrisch zu trennen oder eine Impedanz zwischen dem ersten Anschluss (122) und dem zweiten Anschluss (124) zu vergrößern.

2. Steckkontaktvorrichtung (100) nach Anspruch 1, wobei die elektronische Schalteinheit (120) ferner dazu ausgebildet ist, in Reaktion auf einen Übergang vom gelösten Zustand in den zweiten Zwischenzustand (T₂) und/oder vom zweiten Zwischenzustand (T₂) in den ersten Zwischenzustand (T₁) den ersten Anschluss (122) und den zweiten Anschluss (124) elektrisch leitend zu verbinden oder eine Impedanz zwischen dem ersten Anschluss (122) und dem zweiten Anschluss (124) zu verkleinern, und in Reaktion auf einen Übergang vom ersten Zwischenzustand (T₁) in den zusammengesteckten Zustand (T₀) den ersten Anschluss (122) und den zweiten Anschluss (124) elektrisch zu trennen oder eine Impedanz zwischen dem ersten Anschluss (122) und dem zweiten Anschluss (124) zu vergrößern.

3. Steckkontaktvorrichtung (100) nach Anspruch 1 oder 2, wobei der mindestens eine Steckverbinder (110) jeweils eine erste Steckverbinderhälfte (110-1) und eine zweite Steckverbinderhälfte (110-2) umfasst, und wobei die erste Steckverbinderhälfte (110-1) die HA1 (112-1) und die HI1 (114-1) umfasst und die zweite Steckverbinderhälfte (110-2) die HA2 (112-2) und die HI2 (114-2) umfasst.

4. Steckkontaktvorrichtung (100) nach einem der Ansprüche 1 bis 3, wobei ein Pol einer Gleichstromquelle (130) der Gleichstromverbindung, vorzugsweise ein Pluspol der Gleichstromquelle (130), mit der HA1 (112-1) des Hauptkontakts (112) und/oder dem ersten Anschluss (122) der elektronischen Schalteinheit (120) elektrisch leitend verbunden oder verbindbar ist, und wobei ein Pol eines elektrischen Verbrauchers, vorzugsweise ein Pluspol des Verbrauchers, mit der HA2 (112-2) des Hauptkontakts (112) und/oder der HI2 (114-2) des Hilfskontakts (114) elektrisch leitend verbunden oder verbindbar ist; oder
wobei ein Pol einer Gleichstromquelle (130) der Gleichstromverbindung, vorzugsweise ein Pluspol der Gleichstromquelle (130), mit der HA2 (112-2) des Hauptkontakts (112) und/oder der HI2 (114-2) des Hilfskontakts (114) elektrisch leitend verbunden oder verbindbar ist, und wobei ein Pol eines elektrischen Verbrauchers, vorzugsweise ein Pluspol des Verbrauchers, mit der HA1 (112-1) des Hauptkontakts (112) und/oder dem ersten Anschluss (122) der elektronischen Schalteinheit (120) elektrisch leitend verbunden oder verbindbar ist.

5. Steckkontaktvorrichtung (100) nach einem der Ansprüche 1 bis 4, wobei die HA1 (112-1) einen Stiftkontakt und die HA2 (112-2) einen Buchsenkontakt umfasst, oder wobei die HA2 (112-2) einen Stiftkontakt und die HA1 (112-1) einen Buchsenkontakt umfasst; und/oder
wobei die HI1 (114-1) einen Stiftkontakt und die HI2 (114-2) einen Buchsenkontakt umfasst, oder wobei die HI2 (114-2) einen Stiftkontakt und die HI1 (114-1) einen Buchsenkontakt umfasst.

6. Steckkontaktvorrichtung nach Anspruch 5, wobei ein Außenprofil des Stiftkontakts und/oder ein Innenprofil des Buchsenkontakts des HA (112) und/oder ein Außenprofil des Stiftkontakts und/oder ein Innenprofil des Buchsenkontakts des HI (114) des jeweiligen Steckverbinders (110) einen runden, ovalen oder mehreckigen Querschnitt aufweist, und/oder wobei der HA (112) und der HI (114) des jeweiligen Steckverbinders (110) hermaphroditisch sind.

7. Steckkontaktvorrichtung (100) nach einem der Ansprüche 1 bis 6, wobei der HA (112) und der HI (114) jeweils eine Längsachse aufweisen, und wobei die HA1 (112-1) und die HA2 (112-2) sowie die HI1 (114-1) und die HI2 (114-2) jeweils entlang ihrer Längsachse zusammensteckbar und lösbar sind, oder wobei die HA1 (112-1) und die HA2 (112-2) und/oder die HI1 (114-1) und die HI2 (114-2) jeweils entlang einer Querachse, die quer oder senkrecht zur Längsachse ist, zusammensteckbar und lösbar sind,
optional wobei eine Ausdehnung der HI2 (114-2) oder der HI1 (114-1) des HI (114) bezüglich einer Kontaktstelle (115) der HI1 (114-1) bzw. HI2 (114-2), die der HI2 (114-2) oder der HI1 (114-1) des jeweiligen HI (114) zugeordnet ist, länger ist als eine Ausdehnung der HA2 (112-2) oder der HA1 (112-1) des HA (112) bezüglich einer Kontaktstelle (113) der HA1 (112-1) bzw. HA2 (112-2), die der HA2 (112-2) oder der HA1 (112-1) des jeweiligen HA (112) zugeordnet ist, wobei die jeweilige Ausdehnung entlang der Längsachse in der Richtung des Zusammensteckens im zusammengesteckten Zustand bestimmt ist.

8. Steckkontaktvorrichtung (100) nach Anspruch 7, wobei die HI2 (114-2) oder die HI1 (114-1) des HI (114) des mindestens einen Steckverbinders (110) einen Trennabschnitt (117) umfasst, und wobei der Trennabschnitt (117) im zusammengesteckten Zustand (T₀) des jeweiligen Steckverbinders (110) eine galvanische Trennung von der Kontaktstelle der HI1 (114-1) oder der HI2 (114-2), die der HI2 (114-2) oder der HI1 (114-1) des HI (114) zugeordnet ist, bewirkt.

9. Steckkontaktvorrichtung (100) nach Anspruch 8, wobei eine Ausdehnung des Trennabschnitts (117) der HI2 (114-2) oder der HI1 (114-1) eine entlang einer Teilausdehnung der HI2 (114-2) bzw. HI1 (114-1) umlaufende Isolierung umfasst, und wobei die Teilausdehnung der HI2 (114-2) bzw. HI1 (114-1) kürzer ist als die Ausdehnung der HA2 (112-2) oder der HA1 (112-1) des HA (112) bezüglich einer Kontaktstelle (113) der HA1 (112-1) bzw. HA2 (112-2), die die HA2 (112-2) oder die HA1 (112-1) des jeweiligen HA (112) zugeordnet ist, wobei die jeweilige Ausdehnung entlang der Längsachse in der Richtung des Zusammensteckens im zusammengesteckten Zustand bestimmt ist.

10. Steckkontaktvorrichtung (100) nach Anspruch 7 bis 9, wobei die HA1 (112-1) oder die HA2 (112-1) des HA (112) entlang der Längsachse nur eine Kontaktstelle (113) aufweist und/oder die HI1 (114-1) oder die HI2 (114-2) des HI (114) entlang der Längsachse nur eine Kontaktstelle (115) aufweist.

11. Steckkontaktvorrichtung (100) nach einem der Ansprüche 1 bis 10, wobei die elektronische Schalteinheit (120) zum bidirektionalen Stromfluss zwischen dem ersten Anschluss (122) und dem zweiten Anschluss (124) ausgebildet ist.

12. Steckkontaktvorrichtung (100) nach einem der Ansprüche 1 bis 11, wobei die elektronische Schalteinheit (120) mindestens einen Halbleiterschalter umfasst, der dazu ausgebildet ist, bei Anliegen einer elektrischen Spannung zwischen dem ersten Anschluss (122) und dem zweiten Anschluss (124) die Impedanz zwischen dem ersten Anschluss (122) und dem zweiten Anschluss (124) zu verkleinern oder den ersten Anschluss (122) und den zweiten Anschluss (124) elektrisch leitend zu verbinden,
optional nach Anspruch 11wobei die elektronische Schalteinheit (120) eine Gleichrichterbrücke umfasst, die mit dem mindestens einen Halbleiterschalter verkettet ist.

13. Steckkontaktvorrichtung (100) nach Anspruch 12, wobei die elektronische Schalteinheit (120) zwei in zueinander entgegengesetzter Richtung miteinander in Reihe geschaltete Halbleiterschalter umfasst, denen jeweils in Sperrrichtung eine Diode parallel geschaltet ist, optional wobei die elektronische Schalteinheit (120) ferner einen Trigger-Schaltkreis umfasst, der dazu ausgebildet ist, beim Anliegen der elektrischen Spannung zwischen dem ersten Anschluss (122) und dem zweiten Anschluss (124) ein Schließen eines Halbleiterschalters zu bewirken, optional wobei der Trigger-Schaltkreis die Gleichrichterbrücke umfasst.

14. Steckkontaktvorrichtung (100) nach einem der Ansprüche 1 bis 13, wobei die Steckkontaktvorrichtung (100) mindestens zwei Steckverbinder (110) mit jeweils einem HA (112) und einem HI (114) und eine elektronische Schalteinheit (120) umfasst, und wobei der erste Anschluss (122) der elektronischen Schalteinheit (120) mit der HA1 (112-1) jedes HA (112) elektrisch leitend verbunden ist und der zweite Anschluss (124) der elektronischen Schalteinheit (120) mit der HI1 (114-1) jedes HI (114) elektrisch leitend verbunden ist.

15. Steckkontaktvorrichtung (100) nach einem der Ansprüche 1 bis 14, wobei der mindestens eine Steckverbinder (110) ferner einen Gegenpolkontakt, GE (116), mit einer ersten Kontakthälfte, GE1 (116-1), und einer zweite Kontakthälfte, GE2 (116-2), umfasst für einen Gegenpol der Gleichstromverbindung bezüglich des HA (112), vorzugsweise wobei der GE (116) dazu ausgebildet ist, im zusammengesteckten Zustand (T₀) des jeweiligen Steckverbinders, im ersten Zwischenzustand (T₁) des jeweiligen Steckverbinders und im zweiten Zwischenzustand (T₂) des jeweiligen Steckverbinders die GE1 (116-1) und die GE2 (116-2) elektrisch leitend zu verbinden.

## Claims

1. A plug-in contact device (100) for preventing or extinguishing an arc when separating or closing a direct current connection, comprising:
at least one plug-in connector (110) each comprising a main contact, HA (112), and an auxiliary contact, HI (114),
wherein the HA (112) comprises a first contact half, HA1 (112-1), and a second contact half, HA2 (112-2), which are configured to be releasably plugged together, wherein the HA (112) is configured
- to electrically conductively connect the HA1 (112-1) and the HA2 (112-2) in a plugged-together state (T₀) of the respective plug-in connector (110),
- to galvanically separate the HA1 (112-1) and the HA2 (112-2) in a released state of the respective plug-in connector (110),
- to electrically conductively connect the HA1 (112-1) and the HA2 (112-2) in a first intermediate state (T₁) of the respective plug-in connector (110) between the plugged-together state (T₀) and the released state and
- to galvanically separate the HA1 (112-1) and the HA2 (112-2) in a second intermediate state (T₂) of the respective plug-in connector (110) between the first intermediate state (T₁) and the released state,
wherein the auxiliary contact, HI (114), comprises a first contact half, HI1 (114-1), and a second contact half, HI2 (114-2), which are configured to be releasably plugged together,
wherein the HI (114) is configured
- to galvanically separate the HI1 (114-1) and the HI2 (114-2) in the plugged-together state (T₀) of the respective plug-in connector,
- to galvanically separate the HI1 (114-1) and the HI2 (114-2) in the released state of the respective plug-in connector,
- to electrically conductively connect the HI1 (114-1) and the HI2 (114-2) in the first intermediate state (T₁) of the respective plug-in connector and
- to electrically conductively connect the HI1 (114-1) and the HI2 (114-2) in the second intermediate state (T₂) of the respective plug-in connector,
and wherein the HA2 (112-2) and the HI2 (114-2) are electrically conductively connected; and
an electronic switching unit (120), a first terminal (122) of which is electrically conductively connected to the HA1 (112-1) and a second terminal (124) of which is electrically conductively connected to the HI1 (114-1), wherein the electronic switching unit (120) is configured to, in response to a transition from the plugged-together state (T₀) into the first intermediate state (T₁), electrically conductively connect the first terminal (122) and the second terminal (124) or decrease an impedance between the first terminal (122) and the second terminal (124) and to, in response to a transition from the first intermediate state (T₁) into the second intermediate state (T₂) and/or from the second intermediate state (T₂) into the released state (T₃), electrically separate the first terminal (122) and the second terminal (124) or increase an impedance between the first terminal (122) and the second terminal (124).

2. The plug-in contact device (100) according to claim 1, wherein the electronic switching unit (120) is further configured to, in response to a transition from the released state into the second intermediate state (T₂) and/or from the second intermediate state (T₂) into the first intermediate state (T₁), electrically conductively connect the first terminal (122) and the second terminal (124) or decrease an impedance between the first terminal (122) and the second terminal (124), and to, in response to a transition from the first intermediate state (T₁) into the plugged-together state (T₀), electrically separate the first terminal (122) and the second terminal (124) or increase an impedance between the first terminal (122) and the second terminal (124).

3. The plug-in contact device (100) according to claim 1 or 2, wherein the at least one plug-in connector (110) each comprises a first plug-in connector half (110-1) and a second plug-in connector half (110-2), and wherein the first plug-in connector half (110-1) comprises the HA1 (112-1) and the HI1 (114-1) and the second plug-in connector half (110-2) comprises the HA2 (112-2) and the HI2 (114-2).

4. The plug-in contact device (100) according to any one of claims 1 to 3, wherein one pole of a direct current source (130) of the direct current connection, preferably a positive pole of the direct current source (130), is electrically conductively connected or connectable to the HA1 (112-1) of the main contact (112) and/or the first terminal (122) of the electronic switching unit (120), and wherein one pole of an electrical consumer, preferably a positive pole of the consumer, is electrically conductively connected or connectable to the HA2 (112-2) of the main contact (112) and/or of the HI2 (114-2) of the auxiliary contact (114); or
wherein one pole of a direct current source (130) of the direct current connection, preferably a positive pole of the direct current source (130), is electrically conductively connected or connectable to the HA2 (112-2) of the main contact (112) and/or the HI2 (114-2) of the auxiliary contact (114), and wherein one pole of an electrical consumer, preferably a positive pole of the consumer, is electrically conductively connected or connectable to the HA1 (112-1) of the main contact (112) and/or the first terminal (122) of the electronic switching unit (120).

5. The plug-in contact device (100) according to any one of claims 1 to 4, wherein the HA1 (112-1) comprises a pin contact and the HA2 (112-2) a socket contact, or wherein the HA2 (112-2) comprises a pin contact and the HA1 (112-1) a socket contact and/or
wherein the HI1 (114-1) comprises a pin contact and the HI2 (114-2) a socket contact, or wherein the HI2 (114-2) comprises a pin contact and the HI1 (114-1) a socket contact.

6. The plug-in contact device according to claim 5, wherein an outer profile of the pin contact and/or an inner profile of the socket contact of the HA (112) and/or an outer profile of the pin contact and/or an inner profile of the socket contact of the HI (114) of the respective plug-in connector (110) has a round, oval, or polygonal cross-section, and/or wherein the HA (112) and the HI (114) of the respective plug-in connector are hermaphroditic.

7. The plug-in contact device (100) according to any one of claims 1 to 6, wherein the HA (112) and the HI (114) each have a longitudinal axis, and wherein the HA1 (112-1) and the HA2 (112-2) as well as the HI1 (114-1) and the HI2 (114-2) are each capable of being plugged together and released along their longitudinal axis, or wherein the HA1 (112-1) and the HA2 (112-2) and/or the HI1 (114-1) and the HI2 (114-2) are each capable of being plugged together and released along a transverse axis, which is transverse or perpendicular to the longitudinal axis,
optionally wherein an extent of the HI2 (114-2) or of the HI1 (114-1) of the HI (114) with respect to a contact point (115) of the HI1 (114-1) or HI2 (114-2), respectively, which is assigned to the HI2 (114-2) or the HI1 (114-1) of the respective HI (114), is longer than an extent of the HA2 (112-2) or of the HA1 (112-1) of the HA (112) with respect to a contact point (113) of the HA1 (112-1) or HA2 (112-2), respectively, which is assigned to the HA2 (112-2) or to the HA1 (112-1) of the respective HA (112), wherein the respective extent along the longitudinal axis in the direction of the plugging together is determined in the plugged-together state.

8. The plug-in contact device (100) according to claim 7, wherein the HI2 (114-2) or the HI1 (114-1) of the HI (114) of the at least one plug-in connector (110) comprises a separating section (117), and wherein, in the plugged-together state (T₀) of the respective plug-in connector (110), the separating section (117) effects a galvanic separation from the contact point of the HI1 (114-1) or the HI2 (114-2), which is assigned to the HI2 (114-2) or to the HI1 (114-1) of the HI (114).

9. The plug-in contact device (100) according to claim 8, wherein an extent of the separating section (117) of the HI2 (114-2) or of the HI1 (114-1) has an insulation, which is circumferential along a partial extent of the HI2 (114-2) or HI1 (114-1), respectively, and wherein the partial extent of the HI2 (114-2) or HI1 (114-1), respectively, is shorter than the extent of the HA2 (112-2) or of the HA1 (112-1) of the HA (112) with respect to a contact point (113) of the HA1 (112-1) or HA2 (112-2), respectively, which is assigned to the HA2 (112-2) or to the HA1 (112-1) of the respective HA (112), wherein the respective extent along the longitudinal axis is determined in the direction of the plugging together in the plugged-together state.

10. The plug-in contact device (100) according to claim 7 to 9, wherein the HA1 (112-1) or the HA2 (112-1) of the HA (112) has only one contact point (113) along the longitudinal axis and/or the HI1 (114-1) or the HI2 (114-2) of the HI (114) has only one contact point (115) along the longitudinal axis.

11. The plug-in contact device (100) according to any one of claims 1 to 10, wherein the electronic switching unit (120) is configured for the bidirectional current flow between the first terminal (122) and the second terminal (124).

12. The plug-in contact device (100) according to any one of claims 1 to 11, wherein the electronic switching unit (120) comprises at least one semiconductor switch, which, when an electrical voltage is applied between the first terminal (122) and the second terminal (124), is configured to decrease the impedance between the first terminal (122) and the second terminal (124) or to electrically conductively connect the first terminal (122) and the second terminal (124),
optionally according to claim 11, wherein the electronic switching unit (120) comprises a rectifier bridge, which is linked to the at least one semiconductor switch.

13. The plug-in contact device (100) according to claim 12, wherein the electronic switching unit (120) comprises two semiconductor switches, which are connected to one another in series in mutually opposite direction and to which a diode is in each case connected in parallel in the reverse direction, optionally wherein the electronic switching unit (120) further comprises a trigger circuit, which is configured to effect a closing of a semiconductor switch when the electrical voltage is applied between the first terminal (122) and the second terminal (124), optionally wherein the trigger circuit comprises the rectifier bridge.

14. The plug-in contact device (100) according to any one of claims 1 to 13, wherein the plug-in contact device (100) comprises at least two plug-in connectors (110), each comprising an HA (112) and an HI (114) and an electronic switching unit (120), and wherein the first terminal (122) of the electronic switching unit (120) is electrically conductively connected to the HA1 (112-1) of each HA (112) and the second terminal (124) of the electronic switching unit (120) is electrically conductively connected to the HI1 (114-1) of each HI (114).

15. The plug-in contact device (100) according to any one of claims 1 to 14, wherein the at least one plug-in connector (110) further comprises an opposite pole contact, GE (116), comprising a first contact half, GE1 (116-1), and a second contact half, GE2 (116-2), for an opposite pole of the direct current connection with respect to the HA (112), preferably wherein the GE (116) is configured to electrically conductively connect the GE1 (116-1) and the GE2 (116-2) in the plugged-together state (T₀) of the respective plug-in connector, in the first intermediate state (T₁) of the respective plug-in connector and in the second intermediate state (T₂) of the respective plug-in connector.

## Revendications

1. Dispositif de contact à fiche (100) pour éviter ou éteindre un arc électrique lors de la déconnexion ou de la fermeture d'une connexion à courant continu, comprenant:
au moins un connecteur (110) avec respectivement un contact principal, HA (112), et un contact auxiliaire, HI (114),
dans lequel le HA (112) comprend une première moitié de contact, HA1 (112-1), et une seconde moitié de contact, HA2 (112-2), qui peuvent être connectées ensemble de manière détachable, le HA (112) étant adapté pour cela,
- dans un état enfiché (T₀) du connecteur respectif (110), à relier de manière électriquement conductrice la HA1 (112-1) et la HA2 (112-2),
- dans un état détaché du connecteur respectif (110), séparer galvaniquement la HA1 (112-1) et la HA2 (112-2),
- dans un premier état intermédiaire (T₁) du connecteur respectif (110), entre l'état enfiché (T₀) et l'état détaché, à relier de manière électriquement conductrice la HA1 (112-1) et la HA2 (112-2), et
- dans un deuxième état intermédiaire (T₂) du connecteur respectif (110), entre le premier état intermédiaire (T₁) et l'état détaché, à séparer galvaniquement la HA1 (112-1) et la HA2 (112-2),
dans lequel le contact auxiliaire, HI (114), comprend une première moitié de contact, HI1 (114-1), et une seconde moitié de contact, HI2 (114-2), qui peuvent être connectées ensemble de manière amovible, le HI (114) étant conçu pour cela,
- à l'état enfiché (T₀) du connecteur respectif, séparer galvaniquement les HI1 (114-1) et HI2 (114-2),
- à l'état déconnecté du connecteur respectif, séparer galvaniquement les HI1 (114-1) et HI2 (114-2),
- dans le premier état intermédiaire (T₁) du connecteur respectif, à relier de manière électriquement conductrice les HI1 (114-1) et HI2 (114-2), et
- dans le deuxième état intermédiaire (T₂) du connecteur respectif, à relier de manière électriquement conductrice les HI1 (114-1) et HI2 (114-2),
et dans lequel la HA2 (112-2) et la HI2 (114-2) sont connectés de manière électriquement conductrice; et
une unité de commutation électronique (120) dont la première borne (122) est reliée de manière électriquement conductrice à la HA1 (112-1) et dont la deuxième borne (124) est reliée de manière électriquement conductrice à la HI1 (114-1), l'unité de commutation électronique (120) étant conçue à cet effet, en réponse à une transition de l'état enfiché (T₀) au premier état intermédiaire (T₁), à relier de manière électriquement conductrice la première borne (122) et la deuxième borne (124) ou à réduire une impédance entre la première borne (122) et la deuxième borne (124), et, en réponse à une transition du premier état intermédiaire (T₁) au deuxième état intermédiaire (T₂) et/ou du deuxième état intermédiaire (T₂) à l'état dissous, à déconnecter électriquement la première borne (122) et la deuxième borne (124) ou à augmenter une impédance entre la première borne (122) et la deuxième borne (124).

2. Dispositif de contact à fiche (100) selon la revendication 1, dans lequel l'unité de commutation électronique (120) est en outre adaptée pour connecter électriquement la première borne (122) et la deuxième borne (124) ou pour réduire une impédance entre la première borne (122) et la deuxième borne (124) en réponse à une transition de l'état déconnecté vers le deuxième état intermédiaire (T₂) et/ou du deuxième état intermédiaire (T₂) vers le premier état intermédiaire (T₁), et, en réponse à une transition du premier état intermédiaire (T₁) à l'état enfiché (T₀), à déconnecter électriquement la première borne (122) et la deuxième borne (124) ou à augmenter une impédance entre la première borne (122) et la deuxième borne (124).

3. Dispositif de contact à fiche (100) selon la revendication 1 ou 2, dans lequel ledit au moins un connecteur enfichable (110) comprend respectivement une première moitié de connecteur enfichable (110-1) et une seconde moitié de connecteur enfichable (110-2), et dans lequel la première moitié de connecteur enfichable (110-1) comprend la HA1 (112-1) et la HI1 (114-1) et la seconde moitié de connecteur enfichable (110-2) comprend la HA2 (112-2) et la HI2 (114-2).

4. Dispositif de contact à fiche (100) selon l'une des revendications 1 à 3, dans lequel un pôle d'une source de courant continu (130) de la connexion de courant continu, de préférence un pôle positif de la source de courant continu (130), est relié ou peut être relié de manière électriquement conductrice à la HA1 (112-1) du contact principal (112) et/ou à la première borne (122) de l'unité de commutation électronique (120), et dans lequel un pôle d'un consommateur électrique, de préférence un pôle positif du consommateur, est relié ou peut être relié de manière électriquement conductrice à la HA2 (112-2) du contact principal (112) et/ou à la HI2 (114-2) du contact auxiliaire (114); ou
dans lequel un pôle d'une source de courant continu (130) de la connexion de courant continu, de préférence un pôle positif de la source de courant continu (130), est relié ou peut être relié de manière électriquement conductrice à la HA2 (112-2) du contact principal (112) et/ou à la HI2 (114-2) du contact auxiliaire (114), et dans lequel un pôle d'un consommateur électrique, de préférence un pôle positif du consommateur, est relié ou peut être relié de manière électriquement conductrice à la HA1 (112-1) du contact principal (112) et/ou à la première borne (122) de l'unité de commutation électronique (120).

5. Dispositif de contact à fiche (100) selon l'une quelconque des revendications 1 à 4, dans lequel la HA1 (112-1) comprend un contact mâle et la HA2 (112-2) comprend un contact femelle, ou dans lequel la HA2 (112-2) comprend un contact mâle et la HA1 (112-1) comprend un contact femelle; et/ou
dans lequel la HI1 (114-1) comprend un contact mâle et la HI2 (114-2) comprend un contact femelle, ou dans lequel la HI2 (114-2) comprend un contact mâle et la HI1 (114-1) comprend un contact femelle.

6. Dispositif de contact à fiche selon la revendication 5, dans lequel un profil extérieur du contact mâle et/ou un profil intérieur du contact femelle du HA (112) et/ou un profil extérieur du contact mâle et/ou un profil intérieur du contact femelle du HI (114) du connecteur respectif (110) présente une section transversale ronde, ovale ou polygonale, et/ou dans lequel le HA (112) et le HI (114) du connecteur respectif (110) sont hermaphrodites.

7. Dispositif de contact à fiche (100) selon l'une quelconque des revendications 1 à 6, dans lequel le HA (112) et le HI (114) présentent chacun un axe longitudinal, et dans lequel la HA1 (112-1) et la HA2 (112-2) ainsi que la HI1 (114-1) et la HI2 (114-2) peuvent être respectivement assemblés et désassemblés le long de leur axe longitudinal, ou dans lequel les HA1 (112-1) et les HA2 (112-2) et/ou les HI1 (114-1) et les HI2 (114-2) peuvent être assemblés et détachés respectivement le long d'un axe transversal qui est transversal ou perpendiculaire à l'axe longitudinal,
éventuellement dans lequel une extension du HI2 (114-2) ou du HI1 (114-1) du HI (114) par rapport à un point de contact (115) du HI1 (114-1) ou du HI2 (114-2) associé au HI2 (114-2) ou au HI1 (114-1) du HI respectif (114) est plus longue qu'une extension du HA2 (112-2) ou du HA1 (112-1) du HA (112) par rapport à un point de contact (113) du HA1 (112-1) ou du HA2 (112-2), respectivement associé au HA2 (112-2) ou au HA1 (112-1) du HA (112) respectif, l'extension respective étant déterminée le long de l'axe longitudinal dans la direction de l'emboîtement à l'état emboîté.

8. Dispositif de contact à fiche (100) selon la revendication 7, dans lequel la HI2 (114-2) ou la HI1 (114-1) du HI (114) d'au moins un connecteur enfichable (110) comprend une section de séparation (117), et dans lequel la section de séparation (117), dans l'état enfiché (T₀) du connecteur enfichable respectif (110), réalise une séparation galvanique du point de contact du HI1 (114-1) ou du HI2 (114-2) associé au HI2 (114-2) ou au HI1 (114-1) du HI (114).

9. Dispositif de contact à fiche (100) selon la revendication 8, dans lequel une extension de la section de séparation (117) du HI2 (114-2) ou du HI1 (114-1) comprend une isolation périphérique le long d'une extension partielle du HI2 (114-2) ou du HI1 (114-1), et dans lequel l'extension partielle du HI2 (114-2) ou du HI1 (114-1) est plus courte que l'extension du HA2 (112-2) ou du HA1 (112-1) du HA (112) par rapport à un point de contact (113) du HA1 (112-1) ou du HA2 (112-2) associé au HA2 (112-2) ou au HA1 (112-1) du HA (112) respectif, l'extension respective le long de l'axe longitudinal étant déterminée dans la direction de l'emboîtement à l'état emboîté.

10. Dispositif de contact à fiche (100) selon les revendications 7 à 9, dans lequel la HA1 (112-1) ou la HA2 (112-1) du HA (112) ne comporte qu'un point de contact (113) le long de l'axe longitudinal et/ou la HI1 (114-1) ou la HI2 (114-2) du HI (114) ne comporte qu'un point de contact (115) le long de l'axe longitudinal.

11. Dispositif de contact à fiche (100) selon l'une quelconque des revendications 1 à 10, dans lequel l'unité de commutation électronique (120) est configurée pour faire circuler un courant bidirectionnel entre la première borne (122) et la deuxième borne (124).

12. Dispositif de contact à fiche (100) selon l'une des revendications 1 à 11, dans lequel l'unité de commutation électronique (120) comprend au moins un commutateur à semi-conducteur qui est conçu pour, en cas d'application d'une tension électrique entre la première borne (122) et la deuxième borne (124), réduire l'impédance entre la première borne (122) et la deuxième borne (124) ou relier de manière électriquement conductrice la première borne (122) et la deuxième borne (124),
facultativement selon la revendication 11, dans lequel l'unité de commutation électronique (120) comprend un pont redresseur enchaîné à l'au moins un commutateur à semi-conducteurs.

13. Dispositif de contact à fiche (100) selon la revendication 12, dans lequel l'unité de commutation électronique (120) comprend deux commutateurs à semi-conducteurs montés en série l'un avec l'autre dans des directions opposées l'une à l'autre, à chacun desquels une diode est montée en parallèle dans la direction de blocage, en option dans lequel l'unité de commutation électronique (120) comprend en outre un circuit de déclenchement qui est conçu pour provoquer une fermeture d'un commutateur à semi-conducteurs lors de l'application de la tension électrique entre la première borne (122) et la deuxième borne (124), en option dans lequel le circuit de déclenchement comprend le pont redresseur.

14. Dispositif de contact à fiche (100) selon l'une des revendications 1 à 13, dans lequel le dispositif de contact enfichable (100) comprend au moins deux connecteurs (110) avec chacun un HA (112) et un HI (114) et une unité de commutation électronique (120), et dans lequel la première connexion (122) de l'unité de commutation électronique (120) est reliée de manière électriquement conductrice au HA1 (112-1) de chaque HA (112) et la deuxième connexion (124) de l'unité de commutation électronique (120) est reliée de manière électriquement conductrice au HI1 (114-1) de chaque HI (114).

15. Dispositif de contact à fiche (100) selon l'une quelconque des revendications 1 à 14, dans lequel ledit au moins un connecteur mâle (110) comprend en outre un contact de pôle opposé, GE (116), comprenant une première moitié de contact, GE1 (116-1), et une deuxième moitié de contact, GE2 (116-2), pour un pôle opposé de la connexion en courant continu par rapport au HA (112), de préférence dans lequel le GE (116) est conçu pour relier de manière électriquement conductrice le GE1 (116-1) et le GE2 (116-2) dans l'état enfiché (T₀) du connecteur respectif, dans le premier état intermédiaire (T₁) du connecteur respectif et dans le deuxième état intermédiaire (T₂) du connecteur respectif.
